# EUROPÄISCHE PATENTSCHRIFT

(11) **EP 3 383 666 B1**
(45) Veröffentlichungstag und Bekanntmachung des Hinweises auf die Patenterteilung: **21.08.2019**
(21) Anmeldenummer: 16759728.5
(22) Anmeldetag: 29.08.2016
(51) Int. Cl.: B60C 9/18

(54) **NUTZFAHRZEUGREIFEN**
TIRE FOR A UTILITY VEHICLE
PNEU POUR POIDS LOURD

(30) Priorität: 01.12.2015 DE 102015223929
(43) Veröffentlichungstag der Anmeldung: 10.10.2018
(73) Patentinhaber: Continental Reifen Deutschland GmbH, 30165 Hannover (DE)
(72) Erfinder: HALLMANN, Steffen, 30171 Hannover (DE); MÜLLER, Matthias-Stephan, 30827 Garbsen (DE); MINX, Carsten, 31535 Neustadt (DE)
(74) Vertreter: Finger, Karsten
(86) Internationale Anmeldenummer: PCT/EP2016/070270
(87) Internationale Veröffentlichungsnummer: WO 2017/092891

(56) Entgegenhaltungen:
- WO-A1-2006/066602
- JP-A- H11 321 224

## Beschreibung

Die Erfindung betrifft einen Nutzfahrzeugreifen in Radialbauart mit einem Laufstreifen, einer Innenschicht, Seitenwänden, einer Karkasseinlage und einem zwischen dem Laufstreifen und der Karkasseinlage angeordneten Gürtelverband, welcher zumindest drei Gürtellagen aufweist, wobei in den Schulterbereichen jeweils mehrere radial übereinander angeordnete Schulterpolster vorgesehen sind, welche sich in den Bereich der Gürtelkanten erstrecken.

Ein derartiger Nutzfahrzeugreifen mit einem vierlagigen Gürtelverband ist beispielsweise aus der WO 2006/066602 A1 bekannt. Der Nutzfahrzeugreifen weist radial innerhalb des Laufstreifens in jedem Schulterbereich insbesondere zwei Schulterpolster auf, wobei der radial äußere Schulterpolster in den Bereich zwischen dem Laufstreifen und der radial äußersten Gürtellage hineinverläuft und der radial innere Schulterpolster in den Bereich zwischen der radial innersten Gürtellage und der Karkasseinlage hineinragt. Das Gummimaterial der Schulterpolster weist bei 70°C einen dynamischen Speichermodul kleiner 7 MPa auf. Die dem Gummimaterial der Schulterpolster zugrundeliegende Kautschukmischung enthält zumindest einen Dien-Kautschuk, einen Haftvermittler und Schwefel oder einen Schwefelspender. Diese Schulterpolster sollen die Haltbarkeit des Gürtelverbandes erhöhen und den Laufstreifenabrieb vergleichmäßigen.

Aus der DE 103 58 460 B3 ist ein Nutzfahrzeugreifen mit einem Laufstreifen bekannt, welcher radial innerhalb des Laufstreifens einen zumindest zwei unterschiedlich breite Gürtellagen umfassenden Gürtelverband sowie eine zwischen den Gürtelkanten der Gürtellagen angeordnete Gürtelkantenpolsterung aufweist. Die Gürtelkantenpolsterung umfasst zumindest vier Gummischichten mit unterschiedlichen Modulen bei 100% Dehnung gemäß DIN 53 504, wobei der Modul der Gummischichten schrittweise von der schmäleren zur breiten Gürtellage abnimmt. Bei einer Ausführungsvariante sind zwei Gürtelkantenpolster vorgesehen, von welchen der radial äußere Gürtelkantenpolster einen Modul von 4,6 MPa und der radial innere einen Modul von 4,0 MPa aufweist.

Die JP H11 321 224 A offenbart einen Nutzfahrzeugreifen mit einem mehrlagigen, beispielsweise vierlagigen, Gürtelverband mit Gürtelkantenpolstern, wobei bei einem vierlagigen Gürtelverband in jeder Schulter drei übereinander angeordnete Gürtelkantenpolster vorgesehen sind.

Aus der DE 196 52 893 A1 ist ein Fahrzeugluftreifen mit einem mehrlagigen Gürtelverband bekannt, welcher im Bereich der Gürtelkanten Gürtelkantenprofile aus einem Gummimaterial aufweist. Die Gürtelkantenprofile weisen jeweils einen Verlustfaktor tan δ bei 60°C gemäß DIN 53 513 von 0,01 bis 0,15 auf. Ein derartiger Reifen soll eine geringe Wärmeentwicklung in seinen Schulterbereichen aufweisen.

Nutzfahrzeugreifen werden während des Abrollens in den Bereichen ihrer Gürtelkanten besonders stark beansprucht, die damit verbundene Wärmeentwicklung in den Schulterbereichen reduziert die Reifenhaltbarkeit. Eine möglichst geringe Wärmeentwicklung im Bereich der in den Reifenschultern angeordneten Reifenbauteile ist daher von großer Bedeutung.

Da Nutzfahrzeugreifen vor allem in den Schulterbereichen relativ dick sind, ist der Beitrag herkömmlich ausgeführter Schulterpolster zur Reduzierung der Wärmentwicklung meist geringer als erhofft, vor allem bei sehr dicken Gürtelpaketen kann sich die Zone der größten Wärmeentwicklung sogar Richtung Karkasse verschieben, was die Ableitung der Wärme nach außen zusätzlich erschwert.

Der Erfindung liegt daher die Aufgabe zu Grunde, bei einem Reifen der eingangs genannten Art, insbesondere bei Reifen mit hoher Dicke in den Schulterbereichen, die Wärmeentwicklung in den Schulterbereichen zu reduzieren, insbesondere um eine höhere Lastkapazität zu ermöglichen.

Die gestellte Aufgabe wird erfindungsgemäß dadurch gelöst, dass in den Schulterbereichen des Laufstreifens jeweils drei Schulterpolster angeordnet sind, welche übereinstimmende oder im Wesentlichen übereinstimmende Speichermodule gemäß DIN 53513 aufweisen, wobei der Speichermodul jedes Schulterpolsters mindestens 7,0 MPa und höchstens 10,0 MPa beträgt.

Die gemäß der Erfindung gleich große Speichermodule von jeweils 7,0 MPa bis 10,0 MPa aufweisenden Schulterpolster weisen einen geringen Wärmeaufbau unter dynamischen Bedingungen und eine der Steifigkeit auf, die jener der umgebenden Bauteile weitgehend entspricht. Dadurch wird die Möglichkeit eröffnet, eine Laufstreifenmischung zu verwenden, die einen hohen Widerstand gegen Abrieb und gegen das Entstehen von Einschnitten aufweist aber eine hohe Wärmeentwicklung besitzt.

Der Wärmeaufbau unter dynamischen Bedingungen fällt besonders gering aus, wenn die Speichermodule der Schulterpolster nicht oder um höchstens um 3% voneinander abweichen.

Bei einer bevorzugten Ausführungsform weisen die drei Schulterpolster gleichgroße Verlustfaktoren tan δ bei 60°C gemäß DIN 53513 von 0,03 bis 0,08, insbesondere von mindestens 0,05, auf.

Besonders hohe Lastkapazitäten werden ermöglicht, wenn der radial innere Schulterpolster an seiner dicksten Stelle eine Dicke aufweist, welche 10% bis 20%, insbesondere 12% bis 15%, der zwischen der Innenseite der Innenschicht und der Außenfläche des Laufstreifens ermittelten größten Dicke des Reifens in den Schulterbereichen beträgt. In diesem Zusammenhang ist es ferner von Vorteil, wenn der mittlere Schulterpolster an seiner dicksten Stelle eine Dicke aufweist, welche 3% bis 10%, insbesondere mindestens 5%, der zwischen der Innenseite der Innenschicht und der Außenfläche des Laufstreifens ermittelten größten Dicke des Reifens in den Schulterbereichen beträgt. Ferner ist es von Vorteil, wenn der radial äußere Schulterpolster an seiner dicksten Stelle eine Dicke aufweist, welche 10% bis 20%, insbesondere 12% bis 15%, der zwischen der Innenseite der Innenschicht und der Außenfläche des Laufstreifens ermittelten größten Dicke des Reifens in den Schulterbereichen beträgt.

Bei einer bevorzugten Ausführungsvariante reicht der radial äußere Schulterpolster in radialer Richtung höchstens bis zu einer Einhüllenden, welche entlang der tiefsten Stellen der übereinstimmend tief ausgeführten Umfangsrillen des Laufstreifens und zumindest im Wesentlichen parallel zur Laufstreifenoberfläche sowie in Umfangsrichtung innerhalb des Laufstreifens verläuft.

Für eine besonders einfache Fertigung des Nutzfahrzeugreifens ist es von Vorteil, wenn die Schulterpolster aus übereinstimmendem Gummimaterial bestehen.

Vorzugsweise überragt der mittlere Schulterpolster den radial inneren Schulterpolster, im Querschnitt betrachtet, beidseitig. Der radial äußere Schulterpolster überragt vorzugsweise den mittleren Schulterpolster, im Querschnitt betrachtet, beidseitig.

Zur weiteren Reduktion der Wärmeentwicklung in den Schulterbereichen sind die Schulterpolster auf spezielle Weise gegenüber den Gürtelkanten angeordnet. Dabei ist es von Vorteil, wenn sich der radial innere Schulterpolster in axialer Richtung von einer Position im Bereich zwischen der Kante der ersten Gürtellage und der Kante der zweiten Gürtellage bis zur bzw. in die Nähe der Seitenwand erstreckt. Ferner ist es von Vorteil, wenn der mittlere Schulterpolster in axialer Richtung bis zu 10,0 mm zwischen zwei Gürtellagen hineinverläuft und sich laufstreifenaußenseitig bis zur bzw. in die Nähe der Seitenwand erstreckt. Der radial äußere Schulterpolster überlappt vorzugsweise die radial äußerste Gürtellage und läuft im Bereich radial innerhalb der axial äußersten Umfangsrille aus, wobei sich der radial äußere Schulterpolster laufstreifenaußenseitig vorzugsweise bis zur bzw. in die Nähe der Seitenwand erstreckt.

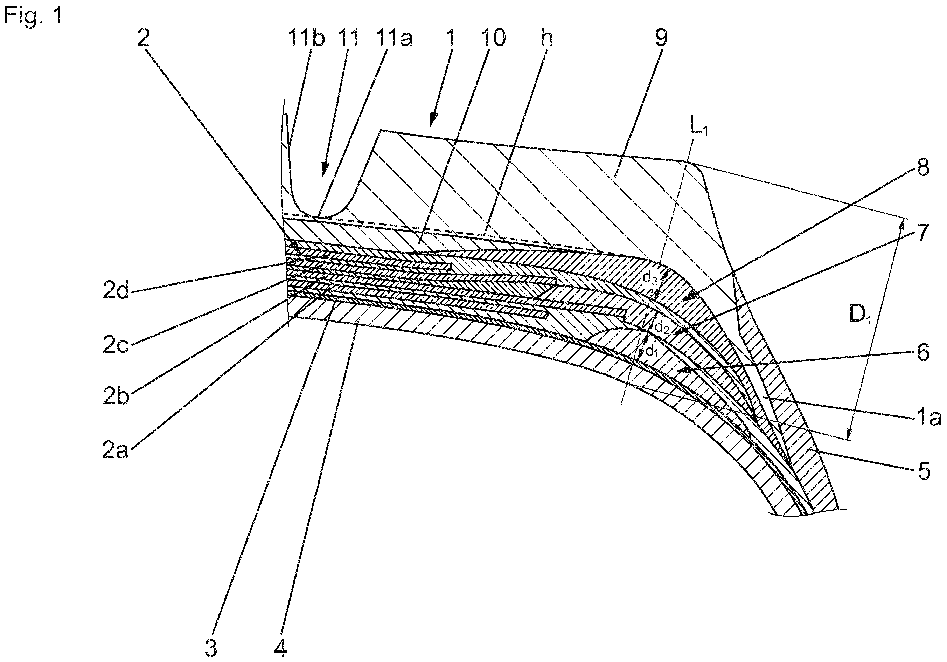

Weitere Merkmale, Vorteile und Einzelheiten der Erfindung werden nun anhand der einzigen Figur, Fig. 1, welche einen schulterseitigen Teilquerschnitt durch einen Nutzfahrzeugreifen im Bereich des Gürtels und des Laufstreifens mit einer Ausführungsvariante gemäß der Erfindung zeigt, näher erläutert.

Die Erfindung befasst sich mit in Schulterbereichen von Nutzfahrzeugreifen in Radialbauart angeordneten Gummibauteilen (Schulterpolstern), welche die bei Nutzfahrzeugreifen besonders stark ausgeprägte Wärmentwicklung während des Fahrens im Bereich der Gürtelkanten reduzieren. Sämtliche Dimensionsangaben beziehen sich auf den vulkanisierten, nicht montierten Reifen.

In Fig. 1 sind von den wesentlichen Bauteilen eines Nutzfahrzeugreifens ein Laufstreifen 1, ein Gürtelverband 2, eine Karkasseinlage 3, eine luftdichte Innenschicht 4 und der radial äußere Bereich einer Seitenwand 5 dargestellt. Die radial innerhalb des Gürtelverbandes 2 verlaufende Karkasseinlage 3 sowie die radial innerhalb der Karkasseinlage 3 verlaufende Innenschicht 4 sind vorzugsweise in an sich bekannter Weise ausgeführt.

In den Schulterbereichen des Nutzfahrzeugreifens befindet sich jeweils eine Stelle mit der größten Dicke D₁, ermittelt zwischen der Innenseite der Innenschicht 4 und der Außenfläche des Laufstreifens 1, wobei in Fig. 1 die dickste Stelle mit einer durch den leicht gerundet gezeichneten seitlichen Rand des Laufstreifens 1 verlaufenden Linie L₁ gekennzeichnet ist.

Der Laufstreifen 1 ist bei der gezeigten Ausführungsvariante in radialer Richtung zweischichtig aufgebaut und weist eine die Profilierung enthaltende Laufstreifencap 9 und eine radial innerhalb der Laufstreifencap 9 verlaufende Laufstreifenbase 10 auf. Der Laufstreifen 1 kann auch einteilig ausgeführt sein. Der Laufstreifen 1 weist zumindest zwei übereinstimmend tief ausgeführte Umfangsrillen 11 auf, wobei in Fig. 1 lediglich eine von einem Rillengrund 11a und zwei Rillenflanken 11b begrenzte axial äußerste Umfangsrille 11 dargestellt ist. Der Laufstreifen 1 weist ferner im Querschnitt schulterseitig auslaufende Schulterabschnitte 1a auf, welche von der jeweiligen in radialer Richtung auslaufenden Seitenwand 5 außenseitig überlappt sind. Entlang der tiefsten Stellen der Rillengründe 11a der Umfangsrillen 11 ist eine zumindest im Wesentlichen parallel zur Laufstreifenaußenfläche und in Umfangsrichtung innerhalb des Laufstreifens 1 umlaufende Einhüllende durch eine in Fig. 1 eingezeichnete Hilfslinie h versinnbildlicht.

Der zwischen dem Laufstreifen 1 und der Karkasseinlage 3 befindliche Gürtelverband 2 weist bei der gezeigten Ausführungsvariante vier Gürtellagen 2a, 2b, 2c, 2d auf, welche jeweils aus zueinander im Wesentlichen parallel verlaufenden Festigkeitsträgern, insbesondere Stahlkorden, welche in eine Gummimischung eingebettet sind, bestehen. Die Festigkeitsträger verlaufen unter den üblichen spitzen Winkeln zur Reifenumfangsrichtung, wobei die Festigkeitsträger benachbarter Gürtellagen derart verlaufen können, dass sie einander in bekannter Weise kreuzen. Bei der gezeigten Ausführung ist die radial äußerste Gürtellage 2d, die vierte Gürtellage, jene mit der geringsten Breite. Die zweite und die dritte Gürtellage 2b, 2c sind die sogenannten Arbeitslagen, wobei die zweite Gürtellage 2c am breitesten ausgeführt ist. Die erste Gürtellage 2a ist im Wesentlichen gleich breit wie die dritte Gürtellage 2c. Abweichend von der dargestellten Ausführungsform können auch drei oder fünf Gürtellagen vorgesehen sein.

In jedem Schulterbereich sind ein radial innerer Schulterpolster 6, ein mittlerer Schulterpolster 7 und einen radial äußerer Schulterpolster 8 angeordnet. In unmittelbarer Nähe der Linie L₁ bzw. entlang der Linie L₁ weisen die Schulterpolster 6, 7, 8, wie noch beschrieben wird, jeweils ihrer größte Dicke auf.

Der radial außerhalb der Karkasseinlage 3 angeordnete radial innere Schulterpolster 6 erstreckt sich entlang der und in Kontakt mit der Karkasseinlage 3. In axialer Richtung erstreckt sich der Schulterpolster 6 von einer Position im Bereich zwischen der Kante der ersten Gürtellage 2a und der Kante der zweiten Gürtellage 2b bis zur bzw. in die Nähe der Seitenwand 5. An seiner dicksten Stelle weist der Schulterpolster 6 eine Dicke d₁ auf, welche 10% bis 20%, insbesondere 12% bis 15%, der Dicke D₁ beträgt.

Der mittlere Schulterpolster 7 überragt den radial inneren Schulterpolster 6 bei der gezeigten Ausführungsvariante sowohl laufstreifeninnenseitig als auch laufstreifenaußenseitig. In laufstreifeninnenseitiger Richtung überlappt der Schulterpolster 7 die zweite Gürtellage 2b und ragt, bezogen auf die Kante der dritten Gürtellage 2c, in axialer Richtung bis zu 10,0 mm zwischen die zweite Gürtellage 2b und die dritte Gürtellage 2c hinein. In laufstreifenaußenseitiger Richtung erstreckt sich der Schulterpolster 7 bis zur bzw. in die Nähe der Seitenwand 5. An seiner dicksten Stelle weist der Schulterpolster 7 eine Dicke d₂ auf, welche 3% bis 10%, insbesondere mindestens 5%, der Dicke D₁ beträgt.

Der radial äußere Schulterpolster 8 überragt den mittleren Schulterpolster 7 bei der gezeigten Ausführungsvariante ebenfalls sowohl laufstreifeninnen- als auch laufstreifenaußenseitig. In laufstreifeninnseitiger Richtung überlappt der Schulterpolster 8 die vierte Gürtellage 2d und läuft im Bereich radial innerhalb der axial äußersten Umfangsrille 11 aus. In laufstreifenaußenseitiger Richtung erstreckt sich der Schulterpolster 8 bis zur bzw. in die Nähe der Seitenwand 5. An seiner dicksten Stelle weist der Schulterpolster 8 eine Dicke d₃ auf, welche 10% bis 20%, insbesondere 12% bis 15%, der Dicke D₁ beträgt. Der radial äußere Schulterpolster 8 ist ferner derart eingebaut, dass er radial innerhalb der durch die Hilfslinie h versinnbildlichten Einhüllenden verläuft bzw. höchstens bis zu der durch die Hilfslinie h versinnbildlichten Einhüllenden reicht.

Etwaige zwischen dem Gürtelverband 2 und den Schulterpolstern 6, 7, 8 befindliche Zwischenräume sind mit dem Gummimaterial der Gürtelgummierungen der Gürtellagen 2a, 2b, 2c, 2d ausgefüllt.

Sämtliche Schulterpolster 6, 7, 8 weisen übereinstimmende oder im Wesentlichen übereinstimmende dynamische Speichermodule gemäß DIN 53513 auf, wobei im Wesentlichen übereinstimmende Speichermodule solche sind, welche um höchstens 3% voneinander abweichen. Die Speichermodule der Schulterpolster 6, 7, 8 betragen mindestens 7,0 MPa und höchstens 10,0 MPa. Der dynamische Speichermodul gibt insbesondere Auskunft über die Steifigkeit der Schulterpolster 6, 7, 8, wobei ein hoher dynamischer Speichermodul eine höhere Steifigkeit bedeutet. Unter den während des Fahrbetriebes vorherrschenden dynamischen Bedingungen baut sich in einem Gummibauteil hoher Steifigkeit im Vergleich zu weniger steifen Gummibauteilen deutlich weniger Wärme auf. Die übereinstimmenden bzw. im Wesentlichen übereinstimmenden dynamischen Speichermodule der Schulterpolster 6, 7, 8 bewirken, dass sich die beim Fahren entstehende Wärme auf alle drei Schulterpolster 6, 7, 8 besonders gleichmäßig verteilt, sodass es zu keiner Wärmekonzentrierung in einem der Schulterpolster 6, 7, 8 kommt.

Die Schulterpolster 6, 7, 8 weisen vorzugsweise ferner gleichgroße Verlustfaktoren tan δ bei 60°C gemäß DIN 53513 von 0,03 bis 0,08, insbesondere von mindestens 0,05, auf. Der Verlustfaktor gibt insbesondere über den Wärmeaufbau Auskunft.

Bevorzugter Weise sind sämtliche Schulterpolster 6, 7, 8 aus übereinstimmenden Kautschukmischungen gefertigt und bestehen dementsprechend aus dem gleichen Gummimaterial. In der nachfolgenden Tabelle ist ein Beispiel einer Kautschukmischungszusammensetzung für die Schulterpolster 6, 7, 8 angegeben. Die Mengenangaben erfolgen in der in der Kautschuktechnologie üblichen Einheit phr (parts per hundred rubber), welche sich jeweils auf die Massenteile des Grundpolymers bzw. bei Polymerblends auf jene der Grundpolymere bezieht.

| | [phr] |
|---|---|
| Naturkautschuk | 100 |
| Ruß | 50 - 60 |
| Kieselsäure | 0 - 15 |
| Alterungsschutz | 0 - 15 |
| Zinkoxid | 1,5 - 5 |
| Stearinsäure | 1 - 3 |
| Sulfenamidbeschleuniger | < 1,5 |
| Schwefel | < 1,5 |

### Bezugsziffernliste

- 1 ......................: Laufstreifen
- 1a ....................: schulterseitiger Laufstreifenabschnitt
- 2 ......................: Gürtelverband
- 2a, 2b, 2c, 2d ...: Gürtellage
- 3 ......................: Karkasseinlage
- 4 ......................: Innenschicht
- 5 ......................: Seitenwand
- 6 ......................: radial innerer Schulterpolster
- 7 ......................: mittlerer Schulterpolster
- 8 ......................: radial äußerer Schulterpolster
- 9 ......................: Laufstreifencap
- 10 ....................: Laufstreifenbase
- 11 ....................: Umfangsrille
- 11a ..................: Rillengrund
- 11b ..................: Rillenflanke

## Patentansprüche

1. Nutzfahrzeugreifen in Radialbauart mit einem Laufstreifen (1), einer Innenschicht (4), Seitenwänden (5), einer Karkasseinlage (3) und einem zwischen dem Laufstreifen (1) und der Karkasseinlage (3) angeordneten Gürtelverband (2), welcher zumindest drei Gürtellagen (2a, 2b, 2c, 2d) aufweist, wobei in den Schulterbereichen jeweils mehrere radial übereinander angeordnete Schulterpolster (6, 7, 8) vorgesehen sind, welche sich in den Bereich der Gürtelkanten erstrecken,
**dadurch gekennzeichnet**
**dass** in den Schulterbereichen des Laufstreifens jeweils drei Schulterpolster (6, 7, 8) angeordnet sind, welche übereinstimmende oder im Wesentlichen übereinstimmende Speichermodule gemäß DIN 53513 aufweisen, wobei der Speichermodul jedes Schulterpolsters (6, 7, 8) mindestens 7,0 MPa und höchstens 10,0 MPa beträgt.

2. Nutzfahrzeugreifen nach Anspruch 1, **dadurch gekennzeichnet, dass** die Speichermodule der Schulterpolster (6, 7, 8) höchstens um 3% voneinander abweichen.

3. Nutzfahrzeugreifen nach Anspruch 1 oder 2, **dadurch gekennzeichnet, dass** die drei Schulterpolster (6, 7, 8) gleichgroße Verlustfaktoren tan δ bei 60°C gemäß DIN 53513 von 0,03 bis 0,08, insbesondere von mindestens 0,05, aufweisen.

4. Nutzfahrzeugreifen nach einem der Ansprüche 1 bis 3, **dadurch gekennzeichnet, dass** der radial innere Schulterpolster (6) an seiner dicksten Stelle eine Dicke (d₁) aufweist, welche 10% bis 20%, insbesondere 12% bis 15%, der zwischen der Innenseite der Innenschicht (4) und der Außenfläche des Laufstreifens (1) ermittelten größten Dicke (D₁) des Reifens in den Schulterbereichen beträgt.

5. Nutzfahrzeugreifen nach einem der Ansprüche 1 bis 4, **dadurch gekennzeichnet, dass** der mittlere Schulterpolster (7) an seiner dicksten Stelle eine Dicke (d₂) aufweist, welche 3% bis 10%, insbesondere mindestens 5%, der zwischen der Innenseite der Innenschicht (4) und der Außenfläche des Laufstreifens (1) ermittelten größten Dicke (D₁) des Reifens in den Schulterbereichen beträgt.

6. Nutzfahrzeugreifen nach einem der Ansprüche 1 bis 5, **dadurch gekennzeichnet, dass** der radial äußere Schulterpolster (8) an seiner dicksten Stelle eine Dicke (d₃) aufweist, welche 10% bis 20%, insbesondere 12% bis 15%, der zwischen der Innenseite der Innenschicht (4) und der Außenfläche des Laufstreifens (1) ermittelten größten Dicke (D₁) des Reifens in den Schulterbereichen beträgt.

7. Nutzfahrzeugreifen nach einem der Ansprüche 1 bis 6, **dadurch gekennzeichnet, dass** der radial äußere Schulterpolster (8) in radialer Richtung höchstens bis zu einer Einhüllenden (h) reicht, welche entlang der tiefsten Stellen der übereinstimmend tief ausgeführten Umfangsrillen (11) des Laufstreifens (1) und zumindest im Wesentlichen parallel zur Laufstreifenoberfläche sowie in Umfangsrichtung innerhalb des Laufstreifens (1) verläuft.

8. Nutzfahrzeugreifen nach einem der Ansprüche 1 bis 7, **dadurch gekennzeichnet, dass** die Schulterpolster (6, 7, 8) aus übereinstimmendem Gummimaterial bestehen.

9. Nutzfahrzeugreifen nach einem der Ansprüche 1 bis 8, **dadurch gekennzeichnet, dass** der mittlere Schulterpolster (7) den radial inneren Schulterpolster (6), im Querschnitt betrachtet, beidseitig überragt.

10. Nutzfahrzeugreifen nach einem der Ansprüche 1 bis 9, **dadurch gekennzeichnet, dass** der radial äußere Schulterpolster (8) den mittleren Schulterpolster (6), im Querschnitt betrachtet, beidseitig überragt.

11. Nutzfahrzeugreifen nach einem der Ansprüche 1 bis 10, **dadurch gekennzeichnet, dass** sich der radial innere Schulterpolster (6) in axialer Richtung von einer Position im Bereich zwischen der Kante der ersten Gürtellage (2a) und der Kante der zweiten Gürtellage (2b) bis zur bzw. in die Nähe der Seitenwand (5) erstreckt.

12. Nutzfahrzeugreifen nach einem der Ansprüche 1 bis 11, **dadurch gekennzeichnet, dass** der mittlere Schulterpolster (7) in axialer Richtung bis zu 10,0 mm zwischen zwei Gürtellagen (2b, 2c) hineinverläuft und sich laufstreifenaußenseitig bis zur bzw. in die Nähe der Seitenwand (5) erstreckt.

13. Nutzfahrzeugreifen nach einem der Ansprüche 1 bis 12, **dadurch gekennzeichnet, dass** der radial äußere Schulterpolster (8) die radial äußerste Gürtellage (2d) überlappt und im Bereich radial innerhalb der axial äußersten Umfangsrille (11) ausläuft, wobei sich der radial äußere Schulterpolster (8) laufstreifenaußenseitig bis zur bzw. in die Nähe der Seitenwand (5) erstreckt.

## Claims

1. Commercial-vehicle tyre of radial construction, having a tread (1), an inner layer (4), sidewalls (5), a carcass insert (3) and a belt assembly (2), arranged between the tread (1) and the carcass insert (3), which has at least three belt plies (2a, 2b, 2c, 2d), wherein in each case a plurality of shoulder blocks (6, 7, 8) arranged radially one on top of another are provided in the shoulder regions, said shoulder blocks (6, 7, 8) extending into the region of the belt edges,
**characterized**
**in that** in each case three shoulder blocks (6, 7, 8) are arranged in the shoulder regions of the tread, said shoulder blocks (6, 7, 8) having corresponding or substantially corresponding storage moduli according to DIN 53513, wherein the storage modulus of each shoulder block (6, 7, 8) is at least 7.0 MPa and at most 10.0 MPa.

2. Commercial-vehicle tyre according to Claim 1, **characterized in that** the storage moduli of the shoulder blocks (6, 7, 8) differ from one another by at most 3%.

3. Commercial-vehicle tyre according to Claim 1 or 2, **characterized in that** the three shoulder blocks (6, 7, 8) have equal loss factors tan δ at 60°C according to DIN 53513 of 0.03 to 0.08, in particular of at least 0.05.

4. Commercial-vehicle tyre according to one of Claims 1 to 3, **characterized in that** the radially inner shoulder block (6) has, at its thickest point, a thickness (d₁) that amounts to 10% to 20%, in particular 12% to 15%, of the greatest thickness (D₁), determined between the inner side of the inner layer (4) and the outer face of the tread (1), of the tyre in the shoulder regions.

5. Commercial-vehicle tyre according to one of Claims 1 to 4, **characterized in that** the middle shoulder block (7) has, at its thickest point, a thickness (d₂) that amounts to 3% to 10%, in particular at least 5%, of the greatest thickness (D₁), determined between the inner side of the inner layer (4) and the outer face of the tread (1), of the tyre in the shoulder regions.

6. Commercial-vehicle tyre according to one of Claims 1 to 5, **characterized in that** the radially outer shoulder block (8) has, at its thickest point, a thickness (d₃) that amounts to 10% to 20%, in particular 12% to 15%, of the greatest thickness (D₁), determined between the inner side of the inner layer (4) and the outer face of the tread (1), of the tyre in the shoulder regions.

7. Commercial-vehicle tyre according to one of Claims 1 to 6, **characterized in that** the radially outer shoulder block (8) extends in a radial direction at most as far as an envelope (h) that extends along the deepest points of the correspondingly deeply embodied circumferential grooves (11) of the tread (1) and at least substantially parallel to the tread surface and in the circumferential direction within the tread (1).

8. Commercial-vehicle tyre according to one of Claims 1 to 7, **characterized in that** the shoulder blocks (6, 7, 8) consist of a corresponding rubber material.

9. Commercial-vehicle tyre according to one of Claims 1 to 8, **characterized in that** the middle shoulder block (7) projects beyond the radially inner shoulder block (6), as seen in cross section, on both sides.

10. Commercial-vehicle tyre according to one of Claims 1 to 9, **characterized in that** the radially outer shoulder block (8) projects beyond the middle shoulder block (7), as seen in cross section, on both sides.

11. Commercial-vehicle tyre according to one of Claims 1 to 10, **characterized in that** the radially inner shoulder block (6) extends in an axial direction from a position in the region between the edge of the first belt ply (2a) and the edge of the second belt ply (2b) as far as or into the vicinity of the sidewall (5).

12. Commercial-vehicle tyre according to one of Claims 1 to 11, **characterized in that** the middle shoulder block (7) extends inwardly in an axial direction up to 10.0 mm between two belt plies (2b, 2c) and extends on the outer side of the tread as far as or into the vicinity of the sidewall (5).

13. Commercial-vehicle tyre according to one of Claims 1 to 12, **characterized in that** the radially outer shoulder block (8) overlaps the radially outermost belt ply (2d) and ends in the region radially within the axially outermost circumferential groove (11), wherein the radially outer shoulder block (8) extends on the outer side of the tread as far as or into the vicinity of the sidewall (5).

## Revendications

1. Pneu de véhicule utilitaire de type radial avec une bande de roulement (1), une couche intérieure (4), des flancs (5), une nappe de carcasse (3) et un composite de ceinture (2) disposé entre la bande de roulement (1) et la nappe de carcasse (3), qui présente au moins trois couches de ceinture (2a, 2b, 2c, 2d), dans lequel il est prévu dans les régions d'épaulement chaque fois plusieurs coussins d'épaulement (6, 7, 8) disposés radialement l'un au-dessus de l'autre, qui s'étendent dans la région des bords de ceinture,
**caractérisé en ce que** chaque fois trois coussins d'épaulement (6, 7, 8) sont disposés dans les régions d'épaulement de la bande de roulement, lesquels présentent des modules d'accumulation correspondants ou essentiellement correspondants selon DIN 53513, dans lequel le module d'accumulation de chaque coussin d'épaulement (6, 7, 8) vaut au moins 7,0 MPa et au maximum 10,0 MPa.

2. Pneu de véhicule utilitaire selon la revendication 1, **caractérisé en ce que** les modules d'accumulation des coussins d'épaulement (6, 7, 8) s'écartent au maximum de 3 % l'un de l'autre.

3. Pneu de véhicule utilitaire selon une revendication 1 ou 2, **caractérisé en ce que** les trois coussins d'épaulement (6, 7, 8) présentent des facteurs de perte de même valeur tan δ à 60°C selon DIN 53513 de 0,03 à 0,08, en particulier d'au moins 0,05.

4. Pneu de véhicule utilitaire selon l'une quelconque des revendications 1 à 3, **caractérisé en ce que** le coussin d'épaulement radialement intérieur (6) présente à son endroit le plus épais une épaisseur (d₁), qui vaut 10 % à 20 %, en particulier 12 % à 15 %, de la plus grande épaisseur (D₁) du pneu déterminée entre le côté intérieur de la couche intérieure (4) et la face extérieure de la bande de roulement (1) dans les régions d'épaulement.

5. Pneu de véhicule utilitaire selon l'une quelconque des revendications 1 à 4, **caractérisé en ce que** le coussin d'épaulement médian (7) présente à son endroit le plus épais une épaisseur (d₂), qui vaut 3% à 10 %, en particulier au moins 5 %, de la plus grande épaisseur (D₁) du pneu déterminée entre le côté intérieur de la couche intérieure (4) et la face extérieure de la bande de roulement (1) dans les régions d'épaulement.

6. Pneu de véhicule utilitaire selon l'une quelconque des revendications 1 à 5, **caractérisé en ce que** le coussin d'épaulement radialement extérieur (8) présente à son endroit le plus épais une épaisseur (d₃), qui vaut 10 % à 20 %, en particulier 12% à 15 %, de la plus grande épaisseur (D₁) du pneu déterminée entre le côté intérieur de la couche intérieure (4) et la face extérieure de la bande de roulement (1) dans les régions d'épaulement.

7. Pneu de véhicule utilitaire selon l'une quelconque des revendications 1 à 6, **caractérisé en ce que** le coussin d'épaulement radialement extérieur (8) arrive en direction radiale au maximum jusqu'à une enveloppante (h), qui s'étend le long des endroits les plus profonds des rainures périphériques (11) de la bande de roulement (1) réalisés à une profondeur correspondante et au moins essentiellement parallèlement à la surface de la bande de roulement ainsi qu'en direction périphérique à l'intérieur de la bande de roulement (1).

8. Pneu de véhicule utilitaire selon l'une quelconque des revendications 1 à 7, **caractérisé en ce que** les coussins d'épaulement (6, 7, 8) sont constitués de matériau de gomme correspondant.

9. Pneu de véhicule utilitaire selon l'une quelconque des revendications 1 à 8, **caractérisé en ce que** le coussin d'épaulement médian (7) dépasse sur les deux côtés le coussin d'épaulement radialement intérieur (6), en considérant la section transversale.

10. Pneu de véhicule utilitaire selon l'une quelconque des revendications 1 à 9, **caractérisé en ce que** le coussin d'épaulement radialement extérieur (8) dépasse sur les deux côtés le coussin d'épaulement médian (7), en considérant la section transversale.

11. Pneu de véhicule utilitaire selon l'une quelconque des revendications 1 à 10, **caractérisé en ce que** le coussin d'épaulement radialement intérieur (6) s'étend en direction axiale depuis une position située dans la région comprise entre le bord de la première couche de ceinture (2a) et le bord de la deuxième couche de ceinture (2b) jusqu'au flanc (5) ou jusqu'à proximité de celui-ci.

12. Pneu de véhicule utilitaire selon l'une quelconque des revendications 1 à 11, **caractérisé en ce que** le coussin d'épaulement médian (7) se prolonge en direction axiale jusqu'à 10,0 mm entre deux couches de ceinture (2b, 2c) et s'étend sur le côté extérieur de la bande de roulement jusqu'au flanc (5) ou jusqu'à proximité de celui-ci.

13. Pneu de véhicule utilitaire selon l'une quelconque des revendications 1 à 12, **caractérisé en ce que** le coussin d'épaulement radialement extérieur (8) chevauche la couche de ceinture la plus extérieure (2d) et se termine dans la région située radialement à l'intérieur de la rainure longitudinale axialement la plus extérieure (11), dans lequel le coussin d'épaulement radialement extérieur (8) s'étend sur le côté extérieur de la bande de roulement jusqu'au flanc (5) ou jusqu'à proximité de celui-ci.
